# EUROPEAN PATENT APPLICATION

(11) **EP 2 397 724 A1**
(43) Date of publication of application: **21.12.2011**
(21) Application number: 10191478.6
(22) Date of filing: 17.11.2010
(51) Int. Cl.: F16H 55/30, B62M 9/10

(54) **Sprockets made of two-materials with half holes on the edge of central portion**

(30) Priority: 21.06.2010 US 819917
(71) Applicant: Road Dreams Industries Ltd., Grangetown Cardiff CF11 7AW (GB)
(72) Inventor: Wang, Yimin, Ningbo Zhejiang 315010 (CN)
(74) Representative: Hocking, Adrian Niall

(57) **Abstract**

The present sprocket wheel invention enhances the efficiency of sprockets which comprise or consist of two materials, e.g., a lighter material at a central portion (1) of the sprocket and a harder material at a peripheral portion (2) of the sprocket comprising teeth (3), by drilling half holes (4) on the outer peripheral (6) of the central portion (1) and half holes (4) on the inner edge (5) of the peripheral portion (2) of the sprocket. In the preferred embodiment, half of the thickness of the sprocket is the entire hole on the peripheral portion (2) of the sprocket with harder materials, and half of the thickness of the sprocket is designed to have said half holes (4) for rivets (7) to attach the central portion (1) and the peripheral portion (2) of the sprocket.

## Description

### FIELD OF THE INVENTION

The invention relates to sprocket wheels, especially for those intended for outside use in power transmission of motor vehicles.

### BACKGROUND OF THE INVENTION

Power transmissions by chains are widely used in various vehicles, e.g., bicycles and motorcycle. The sprockets in these chain-transmissions transmit the torque from the axels to the chain by the sprocket teeth. For high performance sprockets, two requirements are important. (1) The sprockets must sustain high torque. (2) The sprockets must be lightweight, for the weight in vehicle would increase the burden to other part of the vehicle, e.g., the engine.

It is not an idea to use different materials for the central portion and the peripheral portion of the sprockets, so that lightweight but relatively soft materials can be used at the central portion of the sprockets and harder but heavier materials can be used at the peripheral portion comprising teeth. U.S. Patent No. 969237, which was patented in 1910, is one of the examples.

The basic design, which is composed of a central portion and a peripheral portion comprising teeth is widely used. See U.S. Publication No.: US 2005/0272546.

In certain applications of the two-material design, e.g., U.S. Patent No. 7481729, as well as U.S. Patent No. 969237, the peripheral portion's inward perforated extensions, i.e., the toothed portion, that overlap with the central portion with corresponding recesses and holes act as connection between the central portion and the peripheral portion of the sprocket, but create (1) the weak point in the design, i.e., the neck of the extension, and (2) forced compromise between the strength of the connection and the weight, i.e., the increased number of extensions increases the connective strength but also increases the weight of the sprocket, while the decrease of the number of extensions would increase the force on each extension and thereby increases the metal fatigue on the neck of the extensions.

As the weight of the material increases as the square of the diameter, the thickness of the peripheral portion, i.e., the portion of the diameter that is occupied by the peripheral portion, which is at the outer limit of the sprocket, is critically related to the weight of the overall sprocket. A slight increase in the thickness of the peripheral portion would increase the weight of the entire sprocket significantly.

### SUMMARY OF THE INVENTION

The present invention provides a novel means to attach the central portion of a sprocket to the peripheral portion, and thereby allowing maximum area of the central area in sprocket that is made of two materials, one for the central area, and the other for peripheral, i.e., the teeth, and eliminates the weak points in the traditional design. In the present invention, the connecting holes are drilled on the peripheral portion of the sprocket, half holes are drilled on the peripheral edge of the central portion of the sprocket matching the half holes drilled on the central side of the peripheral portion of the sprocket. This design eliminated the necessity of an extension from the peripheral portion overlapping with the central portion, so rivets could be applied to join the central portion and the peripheral portion of the sprocket, and thereby allow a flexible number of holes, i.e., rivets, to join the central portion and the peripheral portion of the sprocket at expected strengthened.

### BRIEF DESCRIPTION OF THE DRAWINGS

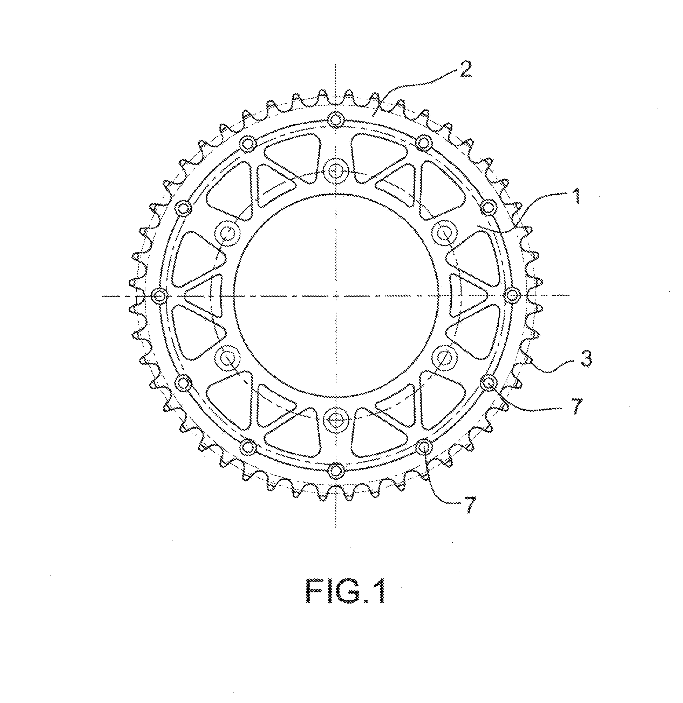

FIG. 1 is a plan view of one embodiment of a sprocket, when assembled, and according to the present invention;

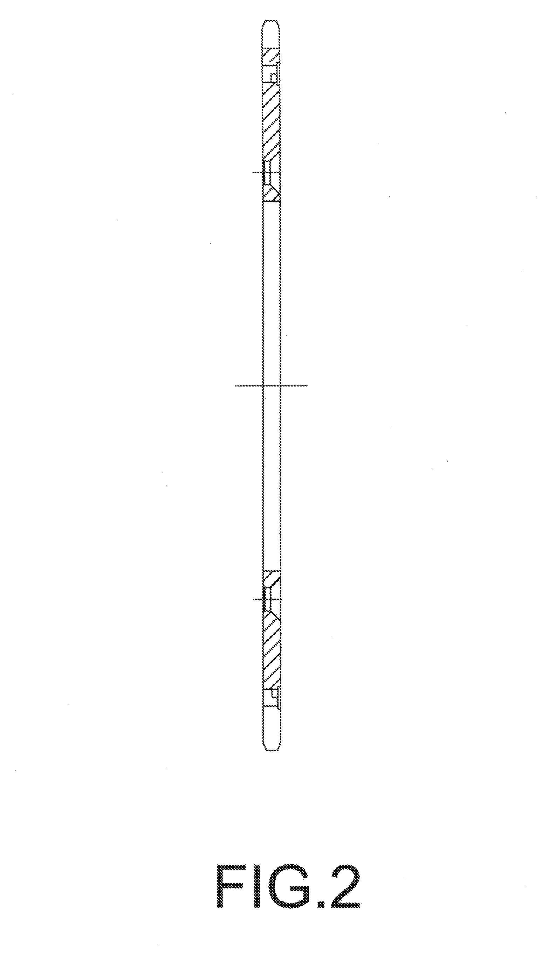

FIG. 2 is a cross-sectional view of the sprocket from FIG. 1., when both portions are joined together by rivets;

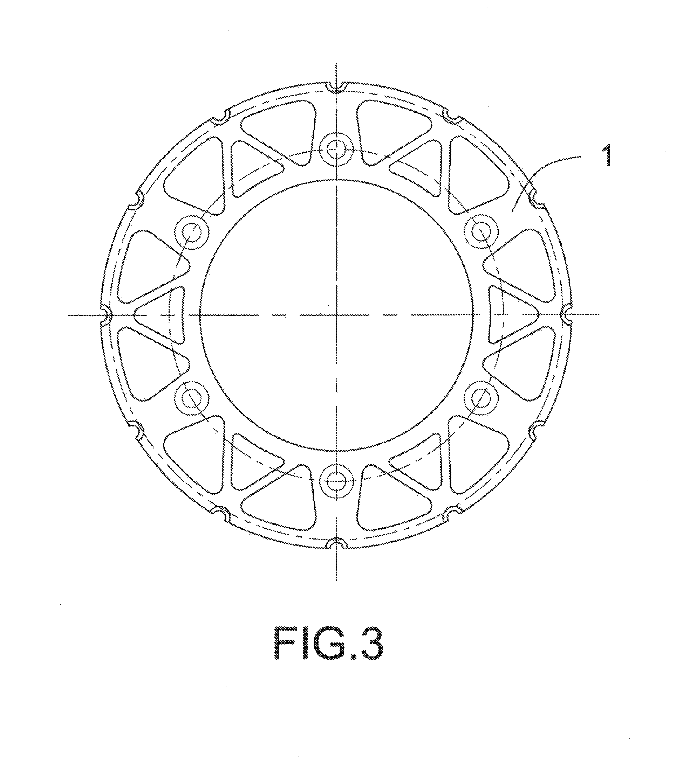

FIG. 3 is a plan view of a central portion of the sprocket, according to the present invention;

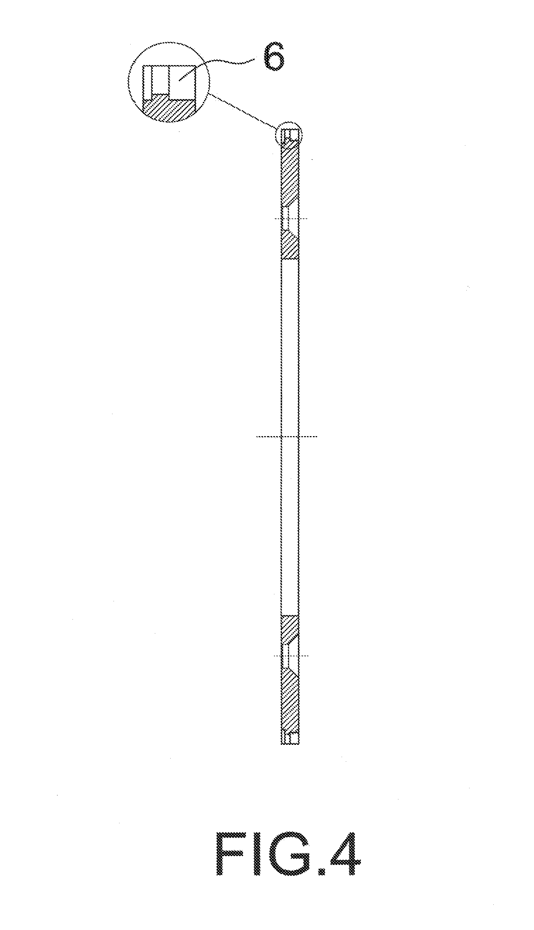

FIG. 4 is a cross-sectional view of the central portion from FIG. 3;

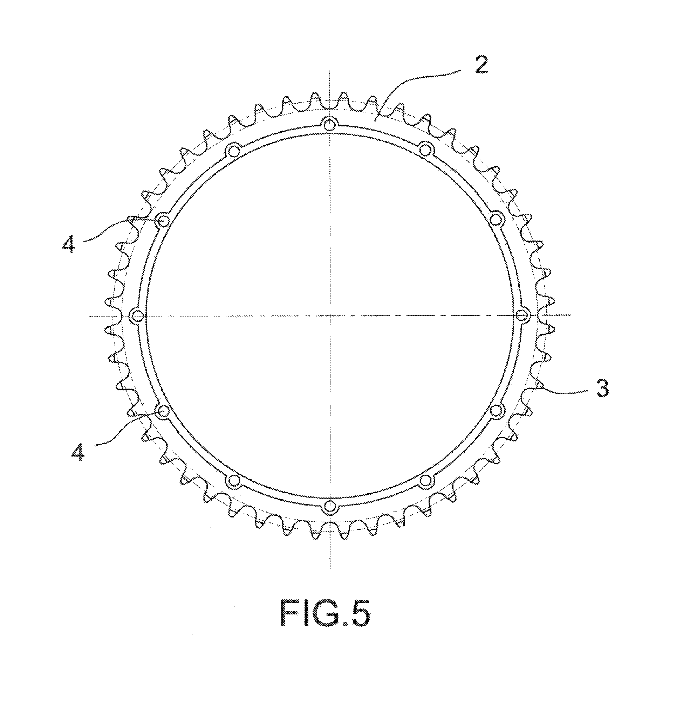

FIG. 5 is a plan view of a rim portion of the sprocket, according to the present invention; and

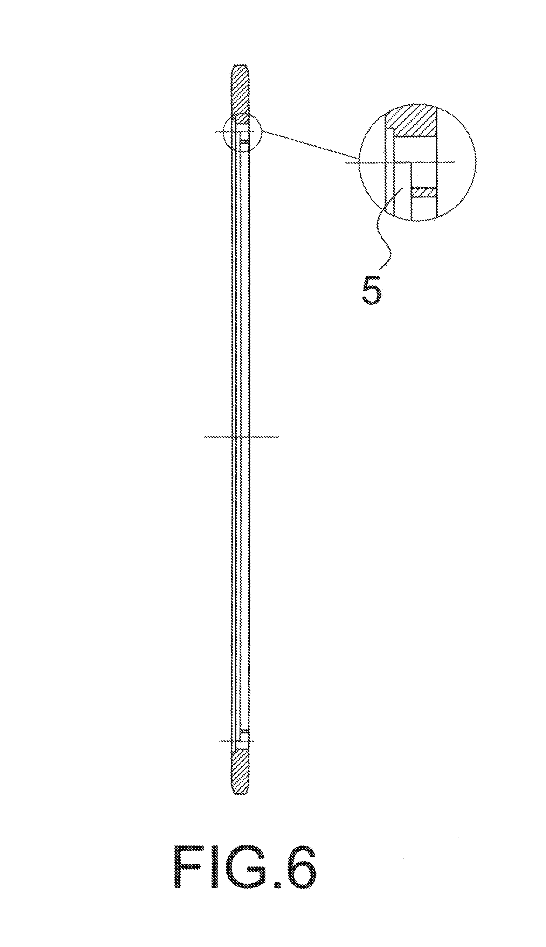

FIG. 6 is a cross-sectional view of a peripheral portion shown from FIG. 5.

### DETAILED DESCRIPTION OF THE INVENTION

In one embodiment of the present invention, the sprocket is made of two parts, i.e., the central portion (1) and the peripheral portion (2). The central portion is connected to the axel and the peripheral portion comprises teeth (3). The central and peripheral portions are joined by rivets.

In this preferred embodiment, holes (4) are drilled on the inner side of the peripheral portion (2). Material of half of the thickness on the inner side (5) of the peripheral portion was removed so that on said half of the thickness, only halves of the holes remain. On the outer side of the central portion, half of the thickness on the outer side (6) of the central portion was removed so that the diameter matches that of the uncut diameter of the peripheral portion. The diameter of the uncut half of the thickness of the central portion matches the cut half of the thickness of the peripheral portion of the sprocket, with half holes drilled on the outer rim of the uncut half of the thickness of the central portion to match the half holes on the peripheral portion.

Rivets (7) are used to join the central portion (1) and the peripheral portion (2) of the sprockets.

The embodiments described above are provided by way of examples only, and various other modifications will be apparent to persons skilled in the art without departing from the scope of the invention as defined by the appended claims.

## Claims

1. A sprocket comprising
a. a central portion,
i. on one side of the central portion, i.e., the central removed side, material is removed for a thickness, and,
ii. on the other side of the central portion, i.e., the central unremoved side, material is not removed, but half holes are drilled, and
b. a peripheral portion, holes are drilled so that,
i. on one side of the peripheral portion, i.e., the peripheral removed side, material is removed for a thickness, so that only half holes remain, and that the diameter of the peripheral removed side matches the diameter of the central unremoved side, with the half holes on the inner side of the peripheral portion matching the half holes on the outer rim of the central unremoved side, and,
ii. on the other side of the central portion, i.e., the peripheral unremoved side, material is not removed, and the diameter of the peripheral unremoved side matches the diameter of the central removed side,
c. rivets are used to fasten the central portion and the peripheral portion.

2. A sprocket as claimed in Claim 1, wherein the central portion and the peripheral portion are of equal thickness and the thickness of the central removed side is equal to the thickness of the central unremoved side and the thickness of the peripheral removed side is equal to the thickness of the peripheral unremoved side.

3. A sprocket as claimed in Claim 1 or Claim 2, wherein the thickness of the central removed side is zero and the thickness of the peripheral unremoved side is zero.
